# EUROPEAN PATENT SPECIFICATION

(11) **EP 4 505 392 B1**
(45) Date of publication and mention of the grant of the patent: **04.11.2026**
(21) Application number: 22953402.9
(22) Date of filing: 30.07.2022
(51) Int. Cl.: H04N 25/47, G06T 5/00

(54) **AN EVENT BASED VISION SENSOR FOR FLICKER ENVIRONMENT DETECTION AND DTECTING METHOD THEREOF**
EREIGNISBASIERTER SICHTSENSOR ZUR ERKENNUNG EINER FLIMMERUMGEBUNG UND VERFAHREN ZU SEINER EINSTELLUNG
CAPTEUR DE VISION BASÉ SUR UN ÉVÉNEMENT POUR DÉTECTION D'ENVIRONNEMENT DE PAPILLOTEMENT ET PROCÉDÉ DE DÉTECTION ASSOCIÉ

(43) Date of publication of application: 12.02.2025
(73) Proprietor: Huawei Technologies Co., Ltd., Shenzhen, Guangdong 518129 (CN)
(72) Inventor: KANEMITSU, Shiroshi, Tokyo 108--0075 (JP); MONOI, Makoto, Tokyo 108--0075 (JP); JIANG, Kewei, Shenzhen, Guangdong 518129 (CN)
(74) Representative: Pfenning, Meinig & Partner mbB
(86) International application number: PCT/CN2022/109279
(87) International publication number: WO 2024/026585

(56) References cited:
- WO-A1-2021/200523
- CN-A- 111 770 290
- CN-A- 112 714 267
- CN-A- 114 827 503
- CN-A- 114 827 585
- KR-A- 20210 077 840
- US-A1- 2021 044 744
- US-A1- 2023 108 884

## Description

### TECHNICAL FIELD

The present invention relates to an imaging device, and more specifically to an event vision sensor with enhanced flicker environment detection, as well as to a camera system and a method for flicker environment detection. The event vision sensor (EVS) can be employed in camera system.

### BACKGROUND

An event-based vision sensor (EVS) is a sensor that detects the luminance change of each pixel in an image sensor and outputs only the changed data. The EVS simulates the mechanism of human eyes, which sense the light, providing high-speed and low-latency data output. With recent advances in image processing technology, EVS has come to be used, for example, in a vision system of automotive vehicle operation.

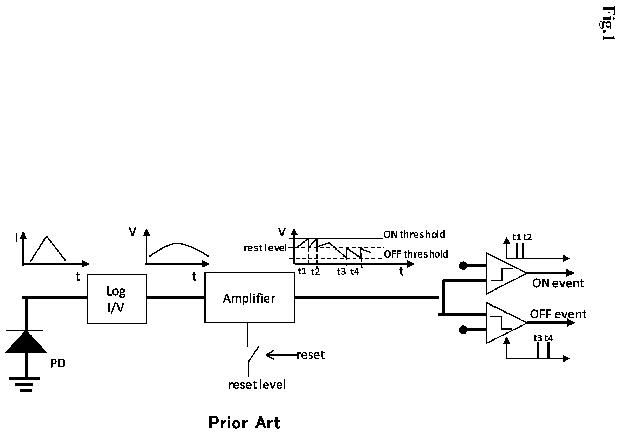

The EVS operates as follows (refer to Fig. 1).
1. A photodetector of the sensor converts the linear current output of the Photo Diode section into a log voltage in response to the intensity of the incident light.
2. An amplifier detects the difference between the input voltage and the reset voltage.
3. A comparator detects and outputs an ON event or an OFF event when the input difference reaches to a preset threshold value for the ON event or the OFF event.
4. When the ON event or the OFF event are output, the threshold value is updated.

That is, when a voltage change due to the incident light exceeds the threshold value of the positive side from the reference voltage (i.e. the change to brighter direction), "1" is output as an on-event (i.e., the ON event). On the other hand, when the voltage change exceeds the threshold value of the negative side from the reference voltage (i.e. the change to darker direction), "-1" is output as an off-event(i.e., the OFF event). When an event occurs, the threshold level is reset so that the luminance level at that point in time becomes the baseline. If the voltage change due to the incident light does not exceed both thresholds, "0" is output as null event (refer to Cited Document 1).

These operations allow the EVS to provide high-speed and low-latency data output. However, under indoor using fluorescent lighting, the EVS responds to flicker of the fluorescent and them output the event. This renders it impossible to capture the behavior of a moving object that essentially needs to be observed.

The flicker environment has been recognized as a problem even in conventional image sensors before the advent of the EVS. In conventional sensors such as a charge-integration type sensor with a rolling shutter system, such as the conventional sensor, a phenomenon known as the "row band" occurs due to differences in exposure timing. In this case, the output signal is used to calculate a frequency of the row band, and the problem can be solved by changing to an appropriate charge integration time synchronized with the frequency (refer to Cited Document 2). However, these solutions are not applicable to the EVS because it is not the charge-integration type sensor. Therefore, camera systems that are likely to be used in a flicker environment generally do not employ the EVS.

Prior art documents are as follows.
(1) Patrick Lichtsteiner, et al. "A 128x128 120dB 15us Latency Asynchronous Temporal Contrast Vision Sensor", IEEE JOURNAL OF SOLID-STATE CIRCUITS, VOL. 43, NO. 2, FEBRUARY 2008
(2) U.S. Patent No.8031237
(3) U.S. Patent application No. 2021/044744, which describes a method for processing a signal from an event-based sensor having an array of sensing elements facing a scene.
(4) International Patent application No. 2021/200523, which describes an imaging device and imaging method.

### SUMMARY

### Problem to be solved by the invention

The objective of the invention is to provide the EVS that can be used in the flicker environment, so that the camera system employing the EVS can cancel event signals generated by the flicker of light and output signals caused by moving objects captured in pixels. The scope of protection of the present invention is set out by the appended claims.

### Means for Solving Problems

According to a first aspect, an embodiment of the present invention provides event-based vision sensor (EVS) according to claim 1.

With reference to the first aspect, in one possible implementation, the EVS further comprising a flicker detection (FD) unit. And the FD unit is configured to count the on-events and the off-events to be output from the on/off counter unit, increment the count in case of the on-event, decrement the count in case of the off-event, and, when the count exceeds a threshold value, determine that the corresponding window is a flicker window, and output a result of the determination.

With reference to the first aspect, in one possible implementation, the IoC unit is further configured to, in case of both on-event and off-event occur simultaneously, output a signal. And the EVS is configured to calculate a logical sum of the signal and the result of the determination output from the FD, determine that the corresponding window is a non-flicker window according to the logical sum, and let the sensor signal to be output from each pixel in the window.

With reference to the first aspect, in one possible implementation, the EVS further comprising a frequency calculation block. And the frequency calculation block is configured to calculate a flicker frequency based on a signal output from the IoC unit identifying the on-event and the off-event and a frame rate in operation.

With reference to the first aspect, in one possible implementation, the frequency calculation block is further configured to compare the calculated flicker frequency with a preset frequency. And the EVS is configured to determine whether to mask each window in accordance with a result of the comparison.

According to a second aspect, an embodiment of the present invention provides a camera system comprising any one of the EVS of possible implementations according to the first aspect described above.

According to a third aspect, an embodiment of the present invention provides a method of detecting a flicker environment using an event-based vision sensor (EVS), where each pixel in a pixel array consisting of the EVS panel generates on-event or off-event in response to a comparison of an output of sensor signal and a threshold. The method comprises step of dividing the pixel array into a plurality of windows, step of counting on-events and off-events occurring for each window in the plurality of windows, and step, in case of the count is one or more on-events in succession or the count is one or more off-events in succession, of determining that the corresponding window is a flicker window and detecting the flicker environment.

With reference to the third aspect, in one possible implementation, the method further comprises step, in case of one or more on-events in succession and one or more off-events in succession continue in the count, of determining that the corresponding window is a flicker window and detecting the flicker environment.

### BREIF DESCRIPTION OF THE ACCOMPANYING DRAWINGS

In order to more clearly describe embodiments of the present invention, the accompanying drawings as required will be briefly described below. Obviously, in the following description, the accompanying drawings show only some embodiments of the present invention, and even other drawings from these accompanying drawings can be drawn by a skilled person in the art without creative effort.
FIG.1 illustrates the operation of EVS in the prior art.
FIG.2 is a schematic diagram for change of luminance in a flicker environment.
FIG.3 illustrates the operation of EVS in the flicker environment.
FIG.4 shows a pixel array window according to the present invention.
FIG.5 shows characteristics of an event caused by the flicker and by a moving object in a window.
FIG.6 is a block diagram showing a first embodiment of the present invention.
FIG.7 shows a table used in an Identification of Condition (IoC) unit in FIG.6.
FIG.8 summarizes the operations according to the first embodiment of the present invention.
FIG.9 is a block diagram showing a second embodiment of the present invention.
FIG.10 shows an operation in a flicker detection (FD) unit to determine whether it is under the flicker environment.
FIG.11 is a block diagram showing a third embodiment of the present invention.
FIG.12 shows an operation to determine whether to mask a window under the flicker environment.
FIG.13 is a block diagram showing a fourth embodiment of the present invention.
FIG.14 is a block diagram showing a fifth embodiment of the present invention.
FIG.15 is a block diagram showing a sixth embodiment of the present invention.

### DETAILED DESCRIPTION OF THE PRESENT INVENTION

Hereinafter, embodiments according to the present invention will be described in detail with reference to the drawings.

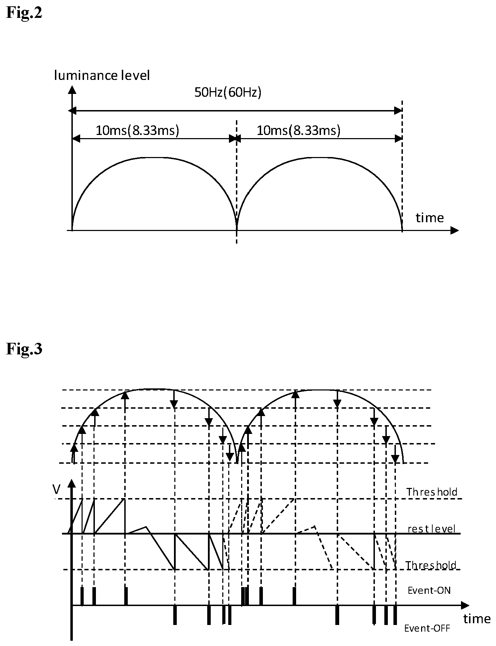

FIG.2 is a schematic diagram for change of luminance in a flicker environment. For example, in a 50 Hz AC power operating environment, the fluorescent lighting indicates a luminance change of 10 ms period which is similar to a sinusoidal wave.

FIG.3 illustrates the operation of the EVS in the flicker environment. In the top row, the size and direction of the luminance change causing the event are represented by arrows in the locus of sinusoidal luminance shown in Fig.2. The middle row shows the relationship between the luminance change and the threshold, and the bottom row shows the resulting event output.

In the top raw of FIG.3, the most left-hand arrow represents the luminance change that causes the first event. This luminance change is a change in a brighter direction, i.e., the change of luminance resulting an on-event. The length of the arrow indicates the magnitude of the luminance change from the reset level shown in the middle row until the threshold is reached. As shown in the bottom row, as the flicker progresses, the level of luminance gets higher, and the first on-event occurs when the magnitude of the luminance change reaches the threshold, outputting a "1". When an event occurs, level of the threshold is reset at that time. Then, as the flicker progresses and the level of luminance becomes even higher, a second on-event occurs when the magnitude of the luminance change reaches the threshold. Similarly, subsequent on-events have occurred. In other words, "1" is output as much as the number of on-events that have occurred.

During the period of time before and after the peak of the sinusoidal wave of the luminance change, i.e., the period of time that the luminance changes from brighter direction to darker direction, does not occur because the magnitude of the luminance change is less than the threshold value. Therefore, "0" is output as no event.

Then, after the peak of the sinusoidal wave of the luminance change, when the flicker changes in the dark, that is, when the luminance change causes an off-event, similarly to the above on-event, the level of luminance decreases as the flicker progresses, and the first off-event occurs when the magnitude of the luminance change reaches a threshold and outputs "-1". When an event occurs, the level is reset at that time. Then, as flicker progresses and the level of luminance falls further, a second off-event occurs when the magnitude of the luminance change reaches a threshold. Similarly, subsequent off-events have occurred. In other words, "-1" is output as much as the number of off-events that have occurred.

Thus, in the flicker environment, the on-event occurs one or more consecutive times, or the off-event occurs one or more consecutive times, depending on the flicker cycle.

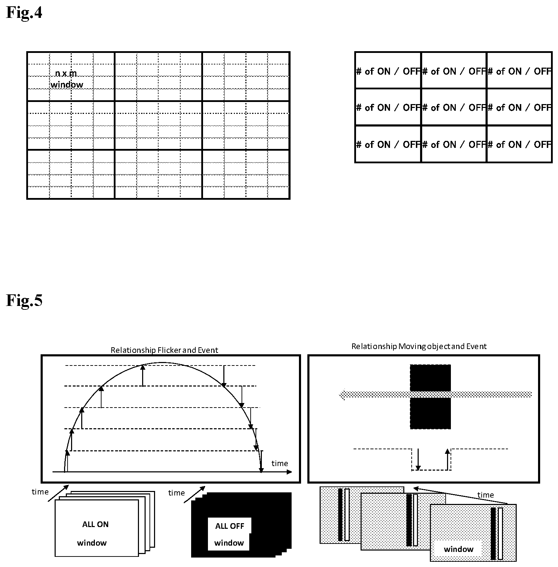

FIG.4 illustrates the pixel array window according to the present invention. The sensor portion of the EVS consists of a pixel array. In the present invention, the pixel array is divided into arbitrary number of windows, e.g., n × m window arrays. In FIG. 4, for example, 12 × 12 pixel array is divided into 3 × 3 windows. For each window, the number of on-events or off-events occurring on the pixels in the window is then counted respectively.

FIG.5 shows the characteristics of an event caused by the flicker and by a moving object in a window. The left diagram shows events in a certain window under the flicker environment, in which, over time, that is, responding to the progress of the frame, a window in which all are on-events occurs in consecutive multiple times, and then a window in which all are off-events follows in consecutive multiple times. On the other hand, in the right diagram, an object moves from the right direction to the left direction, and the moving object is captured in the window. In this case, an on-event and an off-event occur at both edges of the object, and locations of the on-event and the off-event move from right to left over time, that is, as the frame progresses. Thus, the way in which events occur differs significantly between windows that capture the moving object as a target to be observed and windows in the flicker environment.

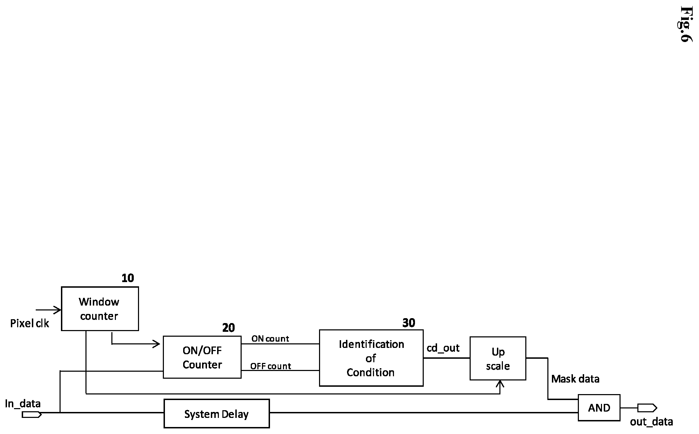

Fig.6 is a block diagram showing the first embodiment of the present invention. In the first embodiment, the EVS includes a window counter unit 10, an on/off counter unit 20, and an Identification of Condition (IoC) unit 30. The window counter unit 10 divides the pixel array into arbitrary window sizes (e.g., n × m matrices), and the on/off counter unit 20 counts on-events and off-events that occur for each window. When the count is completed, the on/off counter unit 20 outputs the result of the count to the IoC unit 30. As the output, if there are on-events in one or more consecutive times, then ON count is 1, otherwise the ON count is 0. Alternatively, as the output, if there are off-events in one or more consecutive times, then OFF count is 1, otherwise the OFF count is 0. The IoC unit 30 masks each window according to the value of each count, that is, determines whether to prohibit the sensor output (In_data) of pixels in the window, or whether to enable the sensor output of pixels in the window (cd_out).

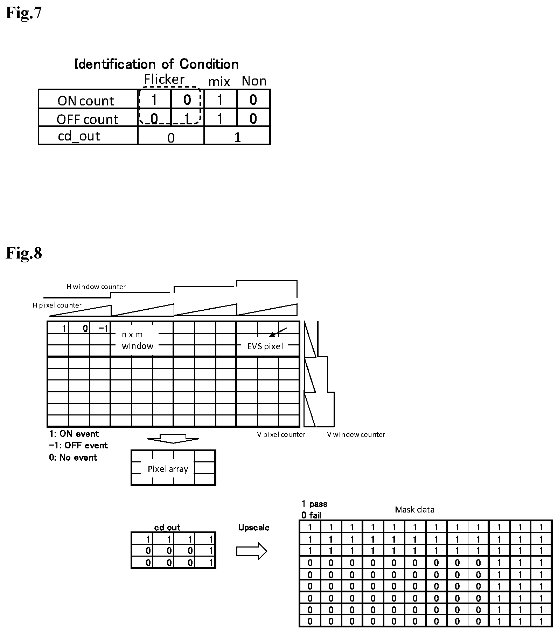

The above described decision is made based on the table shown in FIG.7 as follows.
- When the ON count is 1 and the OFF count is 0, it is determined to be under the flicker environment, and output cd_out with value of 0 to mask the output of the corresponding window.
- When the ON count is 0 and the OFF count is 1, also it is determined to be under the flicker environment, and output cd_out with value of 0 to mask the output of the corresponding window.
- When the ON count is 1 and the OFF count is 1, it is determined not to be under the flicker environment, and output cd_out with value of 1 to enable the output of the corresponding window.
- When the ON count is 0 and the OFF count is 0, also it is determined not to be under the flicker environment, and output cd_out with value of 1 to enable the output of the corresponding window.

FIG.8 summarizes the above operations. Finally, for a window in which cd_out having value of 1, the sensor output is enabled for each pixel in the window. Thereby, even under the flicker environment, it is possible to detect the moving object as a target to be observed by using the event-based vision sensor (EVS).

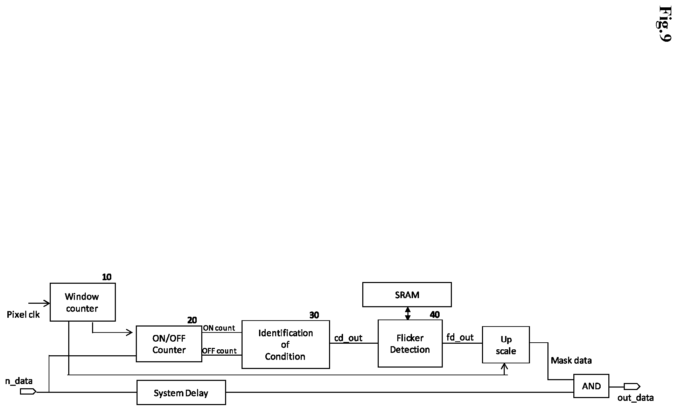

Fig.9 is a block diagram showing the second embodiment of the present invention. In the second embodiment, a flicker detection (FD) unit 40 is added to the block diagram of the EVS according to the first embodiment shown in Fig.6. The input to the FD unit 40 is cd_out from the IoC unit 30, and the FD unit 40outputs fd_out as a result of the flicker detection determination. When it is determined to be under the flicker environment Fd_out is 0 , and if it is determined not to be in the flicker environment Fd_out is 1.

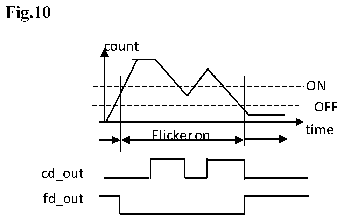

The FD 40 adds hysteresis characteristics to determine whether it is under the flicker environment, so that the flicker detection is robust against the temporary changes in the external environment. In the FD unit 40, for each frame, the number of times that is determined to be under the flicker environment in each window is stored in the SRAM and counted. Specifically, as shown in FIG. 10, the count is incremented during the period determined to be in the flicker environment (i.e., cd_out is 0) and it is decremented during the period determined not to be in the flicker environment (i.e., cd_out is 1). Then, by setting a threshold value for the count number, for a period in which the count number exceeds on-threshold, it is determined to be in the flicker environment and output fd_out with value of 0. While, for a period in which the count number falls below the off-threshold, it is determined not to be in the flicker environment and output fd_out with value of 1. Thereby, for the period in which the count exceeds the on-threshold, even if cd_out becomes 1 during the period, this can be recognized as the temporary change in the external environment assuming that the flicker environment is generally continuing, and then fd_out remains 0. In the example shown in Fig. 10, when the second time cd_out becomes 1 and the decremented count number falls below the off-threshold value, it is determined not to be in the flicker environment, and fd_out is changed from 0 to 1. In this manner, robustness can be added to the flicker detection. The desired robustness can be obtained by adjustment of setting for the on-threshold and off-threshold.

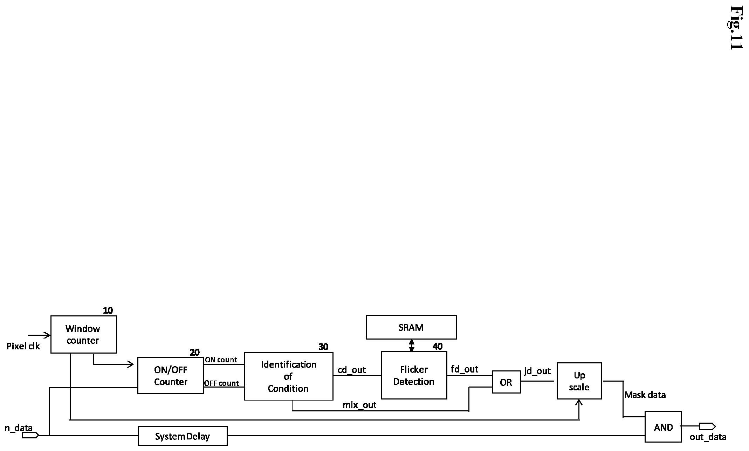

Fig.11 is a block diagram showing a third embodiment of the present invention. The third embodiment is intended to add further rapidity to the EVS according to the above-described second embodiment with added robustness. Specifically, in the third embodiment, in the block diagram of the EVS according to the second embodiment shown in Fig.9, a block for logical determination is added, in which a logical sum (i.e., OR) of fd_out as the output from the FD unit 40 and mix_out as a new output from the IoC unit 30 is taken.

As described above with respect to FIG.5, when the moving object is captured in a window, on-event and off-event occur at both edges of the object. That is, the on-event and the off-event occur simultaneously in the same window, and the ON count with value of 1 and the OFF count with value of 1 are output from the on/off counter unit 20 simultaneously. In such a case, even if the window is determined to be a flicker window (i.e., being under the flicker environment), it is necessary to immediately change the determination to be a non-flicker window so that the sensor output caused by the moving object should be enabled. Therefore, in the third embodiment, mix_out is added as the output from the IoC unit 30.

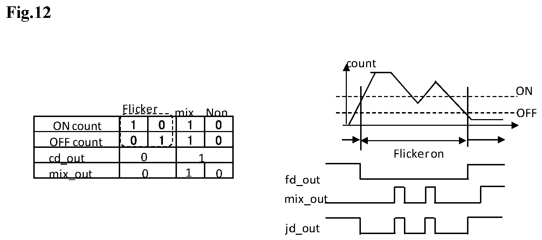

The table in the left side of Fig.12 illustrates the output of the IoC unit 30 according to the third embodiment. When compared with the table above shown in Fig.7, it can be seen that mix_out is prepared in addition to cd_out as the output from the IoC unit 30. The value of Mix_out is 1 only when the ON count is 1 and the OFF count is concurrently, and the value of mix_out is 0 in other cases. In other words, the mix_out with value of 1 indicates that the moving object is captured in the window.

In the third embodiment, a logical sum (OR) of mix_out as a new output from the IoC unit 30 and fd_out as the output of the FD unit 40 is taken, and jd_out is output, thereby controlling whether to mask the window. It can be understood from the chart in the right side of Fig.12 that even in the period determined to be in the flicker environment (fd_out is 0), for the period having mix_out with value of 1, jd_out becomes 1, and for that period, assuming that it is the non-flicker window, the sensor output caused by the moving object is enabled. In this way, robustness can be added to the determination of whether the object is in the flicker environment, and then a quick response can be obtained even when the moving object is captured.

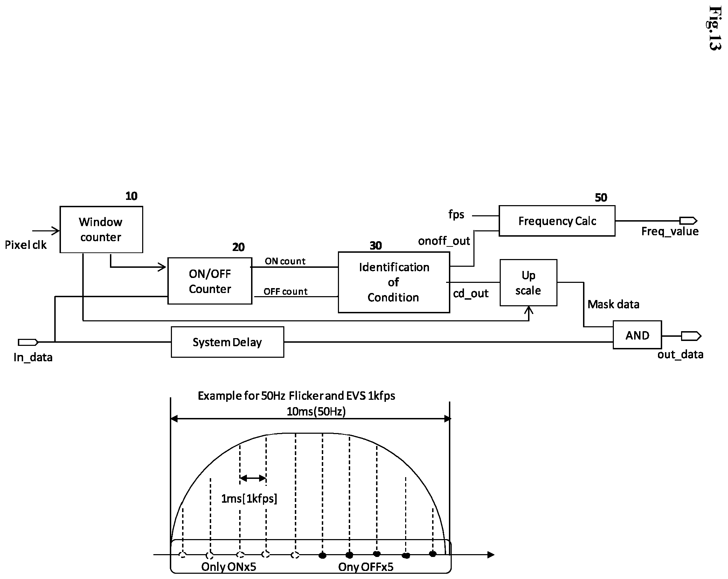

Fig.13 is a block diagram showing the fourth embodiment of the present invention. In the fourth embodiment, a frequency calculation block 50 is added in the first embodiment described above, and a flicker frequency can be calculated.

The frequency calculation block 50 in the fourth embodiment calculates a frequency by using a frame rate fps and onoff_out signal as input, and outputs a frequency Freq_value. Where onoff_out is the signal identifying the on-event and the off-event. As shown in the lower chart of FIG.13, when the frame rate is 1 kfps, then the frame interval is 1 msec, and when 5 consecutive off-events further occur after the occurrence of 5 consecutive on-events, the flicker frequency can be calculated to be 50 Hz. As such, this not only allows motion detection under the flicker environment, but also allows identification of frequency of the flicker.

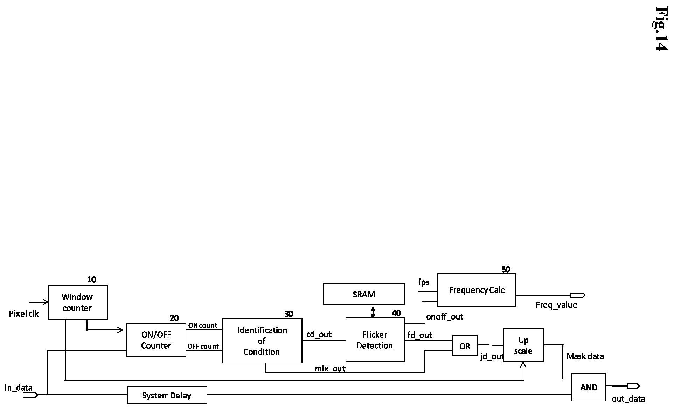

Fig.14 is a block diagram showing a fifth embodiment of the present invention. In the fifth embodiment, a frequency calculation block 50 is added in above described second embodiment or third embodiment. In Fig.14, the frequency calculation block 50 is added to the third embodiment.

As described above, in the second embodiment or the third embodiment, robustness is added to the flicker detection, so it is expected that more robust flicker frequency can be obtained in the fifth embodiment compared to the fourth embodiment.

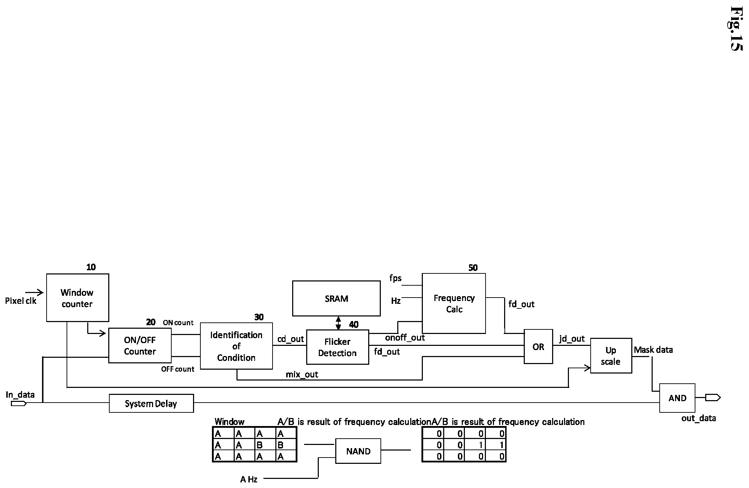

Fig.15 is a block diagram showing the sixth embodiment of the present invention. In the sixth embodiment, the flicker frequency calculated in above described fourth or fifth embodiment is compared to a preset frequency.

In the sixth embodiment, a preset frequency Hz is added as an input to the frequency calculation block 50. As shown in the lower part of FIG.15, for example, when the preset frequency is A[Hz] and when a window exists in which the calculated frequency is B[Hz], only the flicker of the specified frequency can be removed by taking a negative logic product (NAND) of the preset frequency value and the calculated frequency value for each window, and then masking the window in which the result of NAND is 1.

By using the EVS according to the present invention, it is possible to provide a camera system capable of acquiring high image quality without loss of pixel number. Further, a small size of image rotation correction mechanism can be realized in accordance with the present invention.

By using the EVS according to the present invention, it is possible to provide a flicker detection method capable of acquiring high image quality without loss of pixel number. Further, a small size of image rotation correction mechanism can be realized in accordance with the present invention.

### Description of Symbols

10: Window Counter
20: ON/OFF Counter
30: Identification of Condition
40: Flicker Detection
50: Frequency Calculation

## Claims

1. An event-based vision sensor, EVS, comprising:
an EVS panel including a pixel array, wherein each pixel in the pixel array generates an on-event or an off-event in response to a comparison of an output of a sensor signal and a threshold,
a window counter unit (10),
an on/off counter unit (20), and
an Identification of Condition, IoC, unit (30),
wherein the window counter unit partitions the pixel array into a plurality of windows,
wherein the on/off counter unit counts on-events and off-events occurring for each window of the plurality of windows, and outputs the result of the counting as an ON count and an OFF count, wherein:
in a case where one or more on-events and no off-events are counted, the on/off counter unit outputs an ON count value of 1 and outputs an OFF count value of 0;
in a case where one or more off-events and no on-events are counted, the on/off counter unit outputs an OFF count value of 1 and outputs an ON count value of 0;
in a case where on-events and off-events are mixed in the count such that at least one on-event and at least one off-event are counted, the on/off counter unit outputs an ON count value of 1 and outputs an OFF count value of 1; and
in a case where no on-events and no off-events are counted, the on/off counter outputs an ON count value 0 and outputs an OFF count value of 0; and
wherein the IoC unit (30) is configured to:
determine that the corresponding window is a flicker window and mask the window in case of
the value of the ON count is 1 and the value of the OFF count is 0, or
the value of the OFF count is 1 and the value of the ON count is 0,
and,
determine that the corresponding window is a non-flicker window and let the sensor signal to be output from each pixel in the window
in case of
the value of the ON count is 1 and the value of the OFF count is 1, or
the value of the ON count is 0 and the value of the OFF count is 0.

2. The EVS according to claim 1, further comprising:
a flicker detection, FD, unit (40), and wherein
the FD unit is configured to:
receive, for each window, a signal cd_out output by the IoC unit, wherein when the IoC unit determines that the corresponding window is a flicker window the value of cd_out is 0 and when the IoC unit determines that the corresponding window is a non-flicker window the value of cd_out is 1;
increment a flicker environment detection count during a period in which cd_out is 0 and decrement the count during a period in which cd_out is 1, and
for a period in which the flicker environment detection count exceeds a threshold value, determine that the corresponding window is a flicker window, and output a result of the determination.

3. The EVS according to claim 2,
wherein the IoC unit (30) is further configured to:
output a signal mix_out in a case where the value of the ON count is 1 and the value of the OFF count is 1,
and wherein the EVS is configured to:
calculate a logical sum, OR, of the signal mix_out and the result of the determination output from the FD unit (40),
determine that the corresponding window is a non-flicker window and let the sensor signal be output from each pixel in the window according to the logical sum.

4. The EVS according to any one of claims 1 to 3, further comprising:
a frequency calculation block (50), and
wherein the frequency calculation block is configured to:
calculate a flicker frequency based on a signal onoff_out output from the IoC unit (30) identifying an on-event and an off-event and a frame rate in operation.

5. The EVS according to claim 4,
wherein the frequency calculation block (50) is further configured to:
compare the calculated flicker frequency with a preset frequency, and
wherein the EVS is configured to:
determine whether to mask each window in accordance with a result of the comparison.

6. A camera system, comprising the EVS according to any one of claims 1 to 5.

7. A method of detecting a flicker environment using an event-based vision sensor, EVS, that includes an EVS panel comprising a pixel array, and wherein each pixel in the pixel array generates an on-event or an off-event in response to a comparison of an output of a sensor signal and a threshold, and
wherein the method comprising:
partitioning the pixel array into a plurality of windows,
counting on-events events and off-events occurring for each window of the plurality of windows, and outputting the result of the counting as an ON count and an OFF count, wherein:
in a case where one or more on-events and no off-events are counted, the on/off counter unit outputs an ON count value of 1 and outputs an OFF count value of 0;
in a case where one or more off-events and no on-events are counted, the on/off counter unit outputs an OFF count value of 1 and outputs an ON count value of 0;
in a case where on-events and off-events are mixed in the count such that at least one on-event and at least one off-event are counted, the on/off counter unit outputs an ON count value of 1 and outputs an OFF count value of 1; and
in a case where no on-events and no off-events are counted, the on/off counter outputs an ON count value 0 and outputs an OFF count value of 0;
determining that the corresponding window is a flicker window and masking the window in case of
the value of the ON count is 1 and the value of the OFF count is 1, or
the value of the OFF count is 1 and the value of the ON count is 0,
and,
determining that the corresponding window is a non-flicker window and letting the sensor signal be output from each pixel in the window in case of
the value of the ON count is 1 and the value of the OFF count is 1, or
the value of the ON count is 0 and the value of the OFF count is 0.

## Patentansprüche

1. Ereignisbasierter Sichtsensor, EVS, umfassend:
ein EVS-Panel, das ein Pixelarray beinhaltet, wobei jedes Pixel in dem Pixelarray als Reaktion auf einen Vergleich einer Ausgabe eines Sensorsignals mit einem Schwellenwert ein Ein-Ereignis oder ein Aus-Ereignis erzeugt,
eine Fensterzählereinheit (10),
eine Ein-/Aus-Zählereinheit (20) und
eine Zustandsidentifizierungseinheit, IoC-Einheit, (30),
wobei die Fensterzählereinheit das Pixelarray in eine Vielzahl von Fenstern unterteilt,
wobei die Ein-/Aus-Zählereinheit Ein-Ereignisse und Aus-Ereignisse zählt, die für jedes Fenster der Vielzahl von Fenstern auftreten, und das Ergebnis des Zählens als eine EIN-Zählung und eine AUS-Zählung ausgibt, wobei:
in einem Fall, in dem ein oder mehrere Ein-Ereignisse und keine Aus-Ereignisse gezählt werden, die Ein-/Aus-Zählereinheit einen EIN-Zählungswert von 1 ausgibt und einen AUS-Zählungswert von 0 ausgibt;
in einem Fall, in dem ein oder mehrere Aus-Ereignisse und keine Ein-Ereignisse gezählt werden, die Ein-/Aus-Zählereinheit einen AUS-Zählungswert von 1 ausgibt und einen EIN-Zählungswert von 0 ausgibt;
in einem Fall, in dem Ein-Ereignisse und Aus-Ereignisse in der Zählung derart gemischt sind, dass mindestens ein Ein-Ereignis und mindestens ein Aus-Ereignis gezählt werden, die Ein-/Aus-Zählereinheit einen EIN-Zählungswert von 1 ausgibt und einen AUS-Zählungswert von 1 ausgibt; und
in einem Fall, in dem keine Ein-Ereignisse und keine Aus-Ereignisse gezählt werden, der Ein-/Aus-Zähler einen EIN-Zählungswert 0 ausgibt und einen AUS-Zählungswert von 0 ausgibt; und
wobei die IoC-Einheit (30) zu Folgendem konfiguriert ist:
Bestimmen, dass das entsprechende Fenster ein Flimmerfenster ist, und Maskieren des Fensters,
falls
der Wert der EIN-Zählung 1 ist und der Wert der AUS-Zählung 0 ist oder
der Wert der AUS-Zählung 1 ist und der Wert der EIN-Zählung 0 ist,
und
Bestimmen, dass das entsprechende Fenster ein Nicht-Flimmerfenster ist, und Ausgebenlassen des Sensorsignals aus jedem Pixel in dem Fenster,
falls
der Wert der EIN-Zählung 1 ist und der Wert der AUS-Zählung 1 ist oder
der Wert der EIN-Zählung 0 ist und der Wert der AUS-Zählung 0 ist.

2. EVS nach Anspruch 1, ferner umfassend:
eine Flimmererkennungseinheit, FD-Einheit, (40), und wobei
die FD-Einheit zu Folgendem konfiguriert ist:
Empfangen, für jedes Fester, eines Signals cd_out, das durch die IoC-Einheit ausgegeben wird, wobei, wenn die IoC-Einheit bestimmt, dass das entsprechende Fenster ein Flimmerfenster ist, der Wert von cd_out 0 ist und, wenn die IoC-Einheit bestimmt, dass das entsprechende Fenster ein Nicht-Flimmerfenster ist, der Wert von cd_out 1 ist;
Inkrementieren einer Flimmerumgebungserkennungszählung während eines Zeitraums, in dem cd_out 0 ist, und Dekrementieren der Zählung während eines Zeitraums, in dem cd_out 1 ist, und
für einen Zeitraum, in dem die Flimmerumgebungserkennungszählung einen Schwellenwert überschreitet, Bestimmen, dass das entsprechende Fenster ein Flimmerfenster ist, und Ausgeben eines Ergebnisses der Bestimmung.

3. EVS nach Anspruch 2,
wobei die IoC-Einheit (30) ferner zu Folgendem konfiguriert ist: Ausgeben eines Signals mix_out in einem Fall, in dem der Wert der EIN-Zählung 1 ist und der Wert der AUS-Zählung 1 ist,
und wobei der EVS zu Folgendem konfiguriert ist:
Berechnen einer logischen Summe, ODER, des Signals mix_out und des Ergebnisses der Bestimmung, die aus der FD-Einheit (40) ausgegeben wird,
Bestimmen, dass das entsprechende Fenster ein Nicht-Flimmerfenster ist, und Ausgebenlassen des Sensorsignals aus jedem Pixel in dem Fenster gemäß der logischen Summe.

4. EVS nach einem der Ansprüche 1 bis 3, ferner umfassend:
einen Frequenzberechnungsblock (50), und
wobei der Frequenzberechnungsblock zu Folgendem konfiguriert ist:
Berechnen einer Flimmerfrequenz basierend auf einem Signal onoff_out, das aus der IoC-Einheit (30) ausgegeben wird, die ein Ein-Ereignis und ein Aus-Ereignis und eine Einzelbildrate in einem Betrieb identifiziert.

5. EVS nach Anspruch 4,
wobei der Frequenzberechnungsblock (50) ferner zu Folgendem konfiguriert ist:
Vergleichen der berechneten Flimmerfrequenz mit einer voreingestellten Frequenz, und
wobei der EVS zu Folgendem konfiguriert ist:
Bestimmen, ob jedes Fenster gemäß einem Ergebnis des Vergleichs zu maskieren ist.

6. Kamerasystem, umfassend den EVS nach einem der Ansprüche 1 bis 5.

7. Verfahren zum Erkennen einer Flimmerumgebung unter Verwendung eines ereignisbasierten Sichtsensors, EVS, der ein EVS-Panel, umfassend ein Pixelarray, beinhaltet, und wobei jedes Pixel in dem Pixelarray als Reaktion auf einen Vergleich einer Ausgabe eines Sensorsignals mit einem Schwellenwert ein Ein-Ereignis oder ein Aus-Ereignis erzeugt und
wobei das Verfahren Folgendes umfasst:
Unterteilen des Pixelarrays in eine Vielzahl von Fenstern,
Zählen von Ein-Ereignissen und Aus-Ereignissen, die für jedes Fenster der Vielzahl von Fenstern auftreten, und Ausgeben des Ergebnisses des Zählens als eine EIN-Zählung und eine AUS-Zählung, wobei:
in einem Fall, in dem ein oder mehrere Ein-Ereignisse und keine Aus-Ereignisse gezählt werden, die Ein-/Aus-Zählereinheit einen EIN-Zählungswert von 1 ausgibt und einen AUS-Zählungswert von 0 ausgibt;
in einem Fall, in dem ein oder mehrere Aus-Ereignisse und keine Ein-Ereignisse gezählt werden, die Ein-/Aus-Zählereinheit einen AUS-Zählungswert von 1 ausgibt und einen EIN-Zählungswert von 0 ausgibt;
in einem Fall, in dem Ein-Ereignisse und Aus-Ereignisse in der Zählung derart gemischt sind, dass mindestens ein Ein-Ereignis und mindestens ein Aus-Ereignis gezählt werden, die Ein-/Aus-Zählereinheit einen EIN-Zählungswert von 1 ausgibt und einen AUS-Zählungswert von 1 ausgibt; und
in einem Fall, in dem keine Ein-Ereignisse und keine Aus-Ereignisse gezählt werden, der Ein-/Aus-Zähler einen EIN-Zählungswert 0 ausgibt und einen AUS-Zählungswert von 0 ausgibt; Bestimmen, dass das entsprechende Fenster ein Flimmerfenster ist, und Maskieren des Fensters, falls
der Wert der EIN-Zählung 1 ist und der Wert der AUS-Zählung 1 ist oder
der Wert der AUS-Zählung 1 ist und der Wert der EIN-Zählung 0 ist,
und
Bestimmen, dass das entsprechende Fenster ein Nicht-Flimmerfenster ist, und Ausgebenlassen des Sensorsignals aus jedem Pixel in dem Fenster, falls
der Wert der EIN-Zählung 1 ist und der Wert der AUS-Zählung 1 ist oder
der Wert der EIN-Zählung 0 ist und der Wert der AUS-Zählung 0 ist.

## Revendications

1. Capteur de vision basé sur un évènement, EVS, comprenant :
un panneau EVS comportant une matrice de pixels, dans lequel chaque pixel dans la matrice de pixels génère un évènement de marche ou un évènement d'arrêt en réponse à une comparaison d'une sortie d'un signal de capteur et un seuil,
une unité de compteur de fenêtres (10),
une unité de compteur marche/arrêt (20), et
une unité d'identification de condition, IoC (30),
dans lequel l'unité de compteur de fenêtres divise la matrice de pixels en une pluralité de fenêtres,
dans lequel l'unité de compteur marche/arrêt compte des évènements de marche et des évènements d'arrêt survenant pour chaque fenêtre de la pluralité de fenêtres, et produit le résultat du comptage comme un comptage MARCHE et un comptage ARRÊT, dans lequel :
dans un cas où un ou plusieurs évènements de marche et aucun évènement d'arrêt sont comptés, l'unité de compteur marche/arrêt produit une valeur de comptage MARCHE de 1 et produit une valeur du comptage ARRÊT de 0 ;
dans un cas où un ou plusieurs évènements d'arrêt et aucun évènement de marche sont comptés, l'unité de compteur marche/arrête produit la valeur du comptage ARRÊT de 1 et produit une valeur du comptage MARCHE de 0 ;
dans un cas où des évènements de marche et des évènements d'arrêt sont mélangés dans le comptage de sorte qu'au moins un évènement de marche et au moins un évènement d'arrêt sont comptés, l'unité de compteur marche/arrêt produit une valeur de comptage MARCHE de 1 et produit une valeur de comptage ARRÊT de 1 ; et
dans un cas où aucun évènement de marche et aucun évènement d'arrêt ne sont comptés, le compteur marche/arrête produit une valeur de comptage MARCHE de 0 et produit une valeur de comptage ARRÊT de 0 ; et
dans lequel l'unité IoC (30) est configurée pour :
déterminer que la fenêtre correspondante est une fenêtre de papillotement et masquer la fenêtre
dans le cas où
la valeur du comptage MARCHE est de 1 et la valeur du comptage ARRÊT est de 0, ou
la valeur du comptage ARRÊT est de 1 et la valeur du comptage MARCHE est de 0,
et,
déterminer que la fenêtre correspondante est une fenêtre de non-papillotement et permettre la sortie du signal de capteur pour chaque pixel dans la fenêtre
dans le cas où
la valeur du comptage MARCHE est de 1 et la valeur du comptage ARRÊT est de 1, ou
la valeur du comptage MARCHE est de 0 et la valeur du comptage ARRÊT est de 0.

2. EVS selon la revendication 1, comprenant en outre :
une unité de détection de papillotement, FD (40), et dans lequel l'unité FD est configurée pour :
recevoir, pour chaque fenêtre, un signal cd_out produit par l'unité IoC, dans lequel lorsque l'unité IoC détermine que la fenêtre correspondante est une fenêtre de papillotement la valeur de cd_out est de 0 et lorsque l'unité IoC détermine que la fenêtre correspondante est une fenêtre de non-papillotement la valeur de cd_out est de 1 ;
incrémenter un comptage de détection d'environnement de papillotement pendant une période durant laquelle cd_out est de 0 et décrémenter le comptage pendant une période durant laquelle cd_out est de 1, et
pendant une période durant laquelle le comptage de détection d'environnement de papillotement dépasse une valeur seuil, déterminer que la fenêtre correspondante est une fenêtre de papillotement, et produire un résultat de la détermination.

3. EVS selon la revendication 2,
dans lequel l'unité IoC (30) est en outre configurée pour :
produire un signal mix_out dans un cas où la valeur du comptage MARCHE est de 1 et la valeur du comptage ARRÊT est de 1,
et dans lequel l'EVS est configuré pour :
calculer une somme logique, OR, du signal mix_out et du résultat de la sortie de détermination provenant de l'unité FD (40),
déterminer que la fenêtre correspondante est une fenêtre de non-papillotement et permettre la sortie du signal de capteur pour chaque pixel dans la fenêtre selon la somme logique.

4. EVS selon l'une quelconque des revendications 1 à 3, comprenant en outre :
un bloc de calcul de fréquence (50), et
dans lequel le bloc de calcul de fréquence est configuré pour : calculer une fréquence de papillotement sur la base d'un signal de sortie onoff_out provenant de l'unité IoC (30) identifiant un évènement de marche et un évènement d'arrêt et une fréquence d'images en fonctionnement.

5. EVS selon la revendication 4,
dans lequel le bloc de calcul de fréquence (50) est en outre configuré pour :
comparer la fréquence de papillotement calculée avec une fréquence prédéfinie, et
dans lequel l'EVS est configuré pour :
déterminer s'il convient de masquer chaque fenêtre en fonction d'un résultat de la comparaison.

6. Système de caméra, comprenant l'EVS selon l'une quelconque des revendications 1 à 5.

7. Procédé de détection d'un environnement de papillotement à l'aide d'un capteur de vision basé sur un évènement, EVS, qui comporte un panneau EVS comprenant une matrice de pixels, et dans lequel chaque pixel dans la matrice de pixels génère un évènement de marche ou un évènement d'arrêt en réponse à une comparaison d'une sortie d'un signal de capteur et un seuil, et dans lequel le procédé comprenant :
la division de la matrice de pixels en une pluralité de fenêtres, le comptage d'évènements de marche et d'évènements d'arrêt survenant pour chaque fenêtre de la pluralité de fenêtres, et la sortie du résultat de comptage comme un comptage MARCHE et un comptage ARRÊT, dans lequel :
dans un cas où un ou plusieurs évènements de marche et aucun évènement d'arrêt sont comptés, l'unité de compteur marche/arrêt produit une valeur de comptage MARCHE de 1 et produit une valeur de comptage ARRÊT de 0 ;
dans un cas où un ou plusieurs évènements d'arrêt et aucun évènement de marche sont comptés, l'unité de compteur marche/arrêt produit la valeur du comptage ARRÊT de 1 et produit une valeur du comptage MARCHE de 0 ;
dans un cas où des évènements de marche et des évènements d'arrêt sont mélangés dans le comptage de sorte qu'au moins un évènement de marche et au moins un évènement d'arrêt sont comptés, l'unité de compteur marche/arrêt produit une valeur de comptage MARCHE de 1 et produit une valeur de comptage ARRÊT de 1 ; et
dans un cas où aucun évènement de marche et aucun évènement d'arrêt ne sont comptés, le compteur marche/arrête produit une valeur de comptage MARCHE de 0 et produit une valeur de comptage ARRÊT de 0 ;
le fait de déterminer que la fenêtre correspondante est une fenêtre de papillotement et le masquage de la fenêtre dans le cas où
la valeur du comptage MARCHE est de 1 et la valeur du comptage ARRÊT est de 1, ou
la valeur du comptage ARRÊT est de 1 et la valeur du comptage MARCHE est de 0,
et,
le fait de déterminer que la fenêtre correspondante est une fenêtre de non-papillotement et le fait de permettre la sortie du signal de capteur provenant de chaque pixel dans la fenêtre dans le cas où
la valeur du comptage MARCHE est de 1 et la valeur du comptage ARRÊT est de 1, ou
la valeur du comptage MARCHE est de 0 et la valeur du comptage ARRÊT est de 0.
